# EUROPÄISCHE PATENTSCHRIFT

(11) **EP 3 496 896 B1**
(45) Veröffentlichungstag und Bekanntmachung des Hinweises auf die Patenterteilung: **23.08.2023**
(21) Anmeldenummer: 17745718.1
(22) Anmeldetag: 28.07.2017
(51) Int. Cl.: B23Q 11/10, B23B 31/02

(54) **WERKZEUGAUFNAHME**
TOOL HOLDER
LOGEMENT D'OUTIL

(30) Priorität: 12.08.2016 DE 102016115039
(43) Veröffentlichungstag der Anmeldung: 19.06.2019
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Schwarz, Wolfgang
(86) Internationale Anmeldenummer: PCT/EP2017/069126
(87) Internationale Veröffentlichungsnummer: WO 2018/029013

(56) Entgegenhaltungen:
- DE-A1- 10 334 670
- DE-A1-102005 048 635
- DE-A1-102009 040 173
- DE-A1-102014 104 623
- DE-U1-202014 104 802

## Beschreibung

Die Erfindung betrifft eine Werkzeugaufnahme nach dem Oberbegriff des Anspruchs 1.

Aus der DE 10 2014 104 623 A1 ist eine gattungsgemäße Werkzeugaufnahme bekannt, welche einen Aufnahmekörper mit einer Aufnahmeöffnung für einen Werkzeugschaft eines Werkzeugs und ein in der Aufnahmeöffnung angeordnetes Anschlagteil zur Anlage an der Stirnseite des Werkzeugschafts aufweist. Um eine erweiterte Zuführung von Arbeitsfluiden zu dem Werkzeug zu ermöglichen ist, umfasst die Werkzeugaufnahme durch den Aufnahmeköper und das Anschlagteil getrennt verlaufende Fluidzuführungen für die Zuführung zweier Fluide zu dem Werkzeug. Bei einer in der Figuren 13 und 14 der DE 10 2014 104 623 A1 offenbarten Ausführung einer Werkzeugaufnahme ist am vorderen Ende des Anschlagteils ein Verteilerelement mit einem vorderen Anlageteil und einem elastischen hinteren Federteil angeordnet. Durch das Verteilerelement verläuft eine zentrale Durchgangsöffnung, über die ein Fluid von einem zentralen Durchgangsloch im Anschlagteil in eine zentrale Kühlbohrung im Werkzeugschaft des Werkzeugs geleitet werden kann. In dem vorderen Anlageteil des Verteilerelements sind gegenüber dem zentralen Durchgangsloch seitlich versetzte Fluidzuführungen angeordnet, über die ein durch Durchgangskanäle des Anschlagteils geleitetes Fluid zu weiteren, neben der zentralen Kühlbohrung durch den Werkzeugschaft verlaufenden Kühlbohrungen geleitet werden kann.

Aufgabe der Erfindung ist es, eine Werkzeugaufnahme zu schaffen, welche eine zuverlässige Übergabe des über die seitlich versetzten Fluidzuführungen zugeführten Fluids an das Werkzeug ermöglicht.

Diese Aufgabe wird durch eine Werkzeugaufnahme mit den Merkmalen des Anspruchs 1 gelöst. Vorteilhafte Ausgestaltungen der Erfindung sind in den Unteransprüchen angegeben.

Bei der erfindungsgemäßen Werkzeugaufnahme enthält das Anschlagteil an einer dem Werkzeugschafts zugewandten Stirnseite ein bewegliches Anschlagstück, durch welches sich getrennt verlaufende Fluidzuführungen erstrecken. Hierdurch kann sich das Anschlagstück, das an dem Schaftende anliegt, in einem gewissen Rahmen elastisch oder gelenkig bewegen und an die Kontur des Schaftendes anpassen, was eine sicher abgedichtete Übergabe des bzw. der Arbeitsfluide an das Werkzeug ermöglicht. Die Fluidzuführungen münden in entsprechenden Austrittsöffnungen an der dem Werkzeugschaft zugewandten Stirnseite des Anschlagstücks, wobei in dem Anschlagteil und dem Anschlagstück eine zentrale Fluidzuführung und seitlich dazu versetzt mehrere weitere Fluidzuführungen angeordnet sind. Die Austrittsöffnungen der seitlich versetzten Fluidzuführungen münden in einer ringförmigen Nut in der Stirnseite des Anschlagstücks. Dies ermöglicht, dass unabhängig von der Winkellage des Werkzeugs zur Werkzeugaufnahme das bzw. die Arbeitsfluide zuverlässig an entsprechende Bohrungen in dem Werkzeug übergeben werden können.

In einer bevorzugten Ausführungsform sind die Fluidzuführungen in dem Anschlagteil als geschlossene Kanäle ausgebildet. Hierdurch wird gewährleistet, dass in dem Anschlagteil und damit auch dem beweglichen Anschlagstück die Fluidzuführungen einen gleichbleibenden Querschnitt aufweisen, also insbesondere keine abrupten Erweiterungen aufweisen, so dass es nicht zu einer unbeabsichtigten Trennung des bzw. der Arbeitsfluide, beispielsweise von Öl und Luft, oder vorzeitiger Expansion und damit Verdampfung von beispielsweise flüssigem CO₂ in der Fluidzuführung kommt.

Für eine optimale Anpassung an das Werkzeug kann das Anschlagstück einteilig an dem Anschlagteil oder als separates Bauteil ausgebildet sein. Beispielsweise können das Anschlagteil und das Anschlagstück einstückig aus dem gleichen Material gefertigt sein. Es ist jedoch auch möglich, das Anschlagstück aus einem gegenüber dem Anschlagsteil weicheren und elastischeren Material auszubilden, wodurch dieses besonders gute Dichteigenschaften aufweist und einfach austauschbar ist.

Eine besonders gute Anpassung an das Schaftende des Werkzeugs kann dadurch erreicht werden, dass das Anschlagstück mittels eines Kugelgelenks beweglich in dem Anschlagteil gelagert ist. Es sind jedoch auch andere gelenkige Verbindungsarten denkbar, sofern hierdurch ein Verkippen des Anschlagstücks gegenüber dem Anschlagteil möglich ist.

Um das Anschlagteil in dem Aufnahmekörper zu positionieren und damit den Überstand eines eingespannten Werkzeugs gegenüber der Werkzeugaufnahme festzulegen, kann das Anschlagteil ein Außengewinde zur Verbindung mit einem Innengewinde an dem Aufnahmekörper und mindestens eine Schlüsselfläche zur Verdrehung des Anschlagteils aufweisen.

In einer weiteren Ausführungsform ist das Anschlagstück federnd mit dem Anschlagteil verbunden, aber einteilig mit diesem ausgebildet. Dies wird dadurch erreicht, dass zwischen der Außenwand des Anschlagteils und einer Fluidzuführung ein umlaufender Kanal freigehalten wird. Das Anschlagstück kann so elastische Bewegungen ausführen und sich an das Schaftende eines Werkzeuges anpassen.

Eine erfindungsgemäße Werkzeugaufnahme ist vorzugsweise bestrebt, ungewollte Bewegungen des Anschlagstücks zu vermeiden. Daher ist dieses entweder so ausgebildet bzw. befestigt, dass es keine ungewollte axiale Bewegung ausführen kann, und / oder, wenn es sich bei dem Anschlagstück um ein weicheres Material wir z.B. Gummi handelt, so, dass es in axialer Richtung nur im geringen Maße über die Oberfläche der Stirnseite ragt. Idealerweise ist ein elastisches Anschlagstück über den Großteil seiner axialen Erstreckung in eine Ringnut eingelassen.

Im letztgenannten Fall, d.h. bei nur geringen Überstand, ist dieser so gering gewählt, dass das Anschlagstück durch ein eingesetztes Werkzeug soweit zusammengedrückt wird, dass das Schaftende des Werkzeuges vollständig oder im Wesentlichen vollständig an der Stirnseite des Anschlagteils zur Anlage kommt. Der Überstand beträgt daher vorzugsweise weniger als 3 mm. Durch diese feste, flächige Anlage des Werkzeuges wird dessen Leistungsfähigkeit, insbesondere bei Zerspanungsarbeiten, sichergestellt.

Aus dem gleichen Grund verzichtet die Erfindung auch auf lose Teile wie etwa Schraubenfedern als Dämpfungselemente. Lose Teile sind zudem durch hohe Drehzahlen oder Kräfteeinflüsse beim Einspannvorgang eines Werkzeuges anfällig für Beschädigungen bzw. Materialermüdungserscheinungen oder richten selbst Schaden am Werkzeughalter an. Dämpfungselemente wie etwa Schraubenfedern verhindern zudem oftmals ein wiederholgenaues Einspannen. Es ist daher ein wesentlicher Aspekt der Erfindung, auf lange Federwege zu verzichten. Elastische Materialen oder Elemente sind daher vorzugsweise stets so befestigt das sie zumindest über die Hälfte ihrer axialen Länge radial vom Anschlagteil umschlossen sind.

Das Anschlagstück ist entsprechend zwar beweglich aber eben nicht lose ausgebildet, sondern sicher gehalten, d.h. dass es so angebracht oder ausgebildet ist, dass es sich in axialer Richtung nur unter dem Einfluss des Schaftendes des Werkzeuges bewegt aber nicht durch Bewegungen des Werkzeughalters.

Besonders bevorzugt zeichnet sich das Anschlagteil der Werkzeugaufnahme dadurch aus, dass es einen wiederholgenauen Längenanschlag ermöglicht.

Auf diese Art und Weise kann sowohl die sichere Befestigung des Anschlagstücks als auch die sichere und feste Anlage des Werkzeuges erreicht werden.

Weitere Besonderheiten und Vorzüge der Erfindung ergeben sich aus der folgenden Beschreibung bevorzugter Ausführungsbeispiele anhand der Zeichnungen. Es zeigen:
- **Fig. 1**: einen Längsschnitt durch eine Werkzeugaufnahme mit einem eingespannten Werkzeug und einem Anschlagteil gemäß einer ersten Ausführungsform;
- **Fig. 2**: einen Längsschnitt durch das Anschlagteil gemäß der ersten Ausführungsform von Figur 1;
- **Fig. 3**: eine Draufsicht auf das Anschlagteil von Figur 2;
- **Fig. 4**: einen Längsschnitt durch ein Anschlagteil gemäß einer zweiten Ausführungsform;
- **Fig. 5**: eine Draufsicht auf das Anschlagteil von Figur 4;
- **Fig. 6**: einen Längsschnitt durch ein Anschlagteil gemäß einer dritten Ausführungsform;
- **Fig. 7**: eine Draufsicht auf das Anschlagteil von Figur 6;
- **Fig. 8**: einen Längsschnitt durch ein Anschlagteil gemäß einer vierten Ausführungsform, die nicht beansprucht wird;
- **Fig. 9**: eine Draufsicht auf das Anschlagteil von Figur 8;
- **Fig. 10**: einen Längsschnitt durch ein Anschlagteil gemäß einer fünften Ausführungsform und
- **Fig. 11**: einen Längsschnitt durch ein Anschlagteil gemäß einer alternativen Ausführung der fünften Ausführungsform.

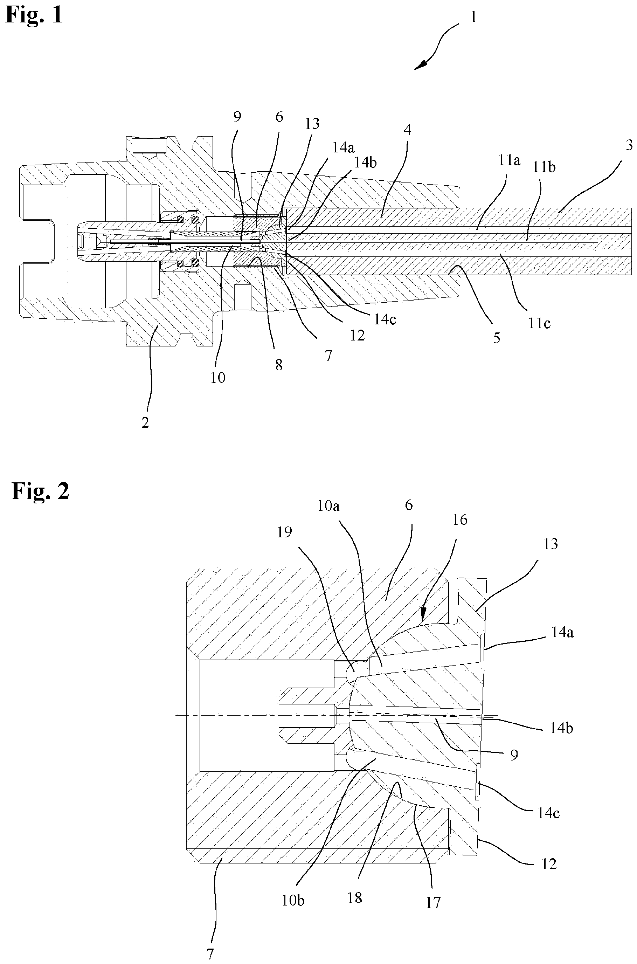

In Figur 1 ist ein Längsschnitt durch eine beispielhaft als Schrumpfspannfutter ausgebildete Werkzeugaufnahme 1 mit einem Aufnahmekörper 2 und einem darin eingespannten Werkzeug 3 in Form eines Schaftfräsers gezeigt. Das Werkzeug 3 ist dabei mit seinem Werkzeugschaft 4 in einer Aufnahmeöffnung 5 an einem vorderen Ende der Werkzeugaufnahme 1 eingesetzt und mittels thermischen Schrumpfens fixiert. In der Werkzeugaufnahme 1 können jedoch auch andere Spannsysteme wie beispielsweise ein Hydrodehnspannfutter, ein Spannzangenfutter, ein Flächenspannfutter oder dergleichen vorgesehen sein. An dem hinteren Ende der Werkzeugaufnahme 1 ist ebenfalls nur beispielhaft eine bekannte HSK-Schnittstelle zur Einspannung der Werkzeugaufnahme in eine Maschinenspindel einer Bearbeitungsmaschine, vorzugsweise eines Fräsbearbeitungszentrums, ausgebildet. Es sind auch Ausführungsformen denkbar, bei denen die Werkzeugaufnahme nicht direkt in die Maschinenspindel eingespannt wird, sondern etwa in Form einer Verlängerung in eine andere Werkzeugaufnahme. In diesem Fall wäre der Aufnahmekörper bevorzugt zylindrisch ausgebildet.

Die Werkzeugaufnahme 1 umfasst zudem ein bevorzugt am Boden in der Aufnahmeöffnung 5 angeordnetes Anschlagteil 6. Das Anschlagteil 6 bildet einen Anschlag für den Werkzeugschaft 4 des Werkzeugs 3, so dass der Überstand des Werkzeugs 3 gegenüber der Werkzeugaufnahme 1 reproduzierbar festgelegt ist. Um den Überstand einstellen zu können, weist das Anschlagteil 6 zudem ein Außengewinde 7 zur Verbindung mit einem Innengewinde 8 an dem Aufnahmekörper 2 auf. Mittels in Figur 1 nicht dargestellter Schlüsselflächen an dem Anschlagteil 6 kann dieses durch ein entsprechendes Handwerkzeug verdreht und damit axial verstellt werden.

Die Werkzeugaufnahme 1 weist des Weiteren zwei durch den Aufnahmekörper 2 und das Anschlagteil 6 getrennt verlaufende Fluidzuführungen 9, 10 für die Zuführung zweier Arbeitsfluide zu dem Werkzeug 2 auf. Als Arbeitsfluide können beispielsweise gekühlte Flüssigkeiten zur Kühlung des Werkzeugs 2 und Schmiermittel zur Schmierung und Kühlung von Schneiden des Werkzeugs 2 verwendet werden. Durch die separaten Kanäle der Fluidzuführungen 9, 10 wird eine Vermischung der Arbeitsfluide zuverlässig verhindert.

Das Schaftende des Werkzeugs 2, insbesondere bei Vollhartmetallwerkzeugen, ist in aller Regel herstellungsbedingt sehr ungenau gefertigt. So werden bei der Herstellung lange Stangen aus Hartmetall möglichst schnell abgeschnitten, ohne auf die Qualität der Schnittfläche zu achten. Auf die Abschnitte werden dann an einem Ende die Schneiden angeschliffen. Das andere schaftseitige Ende bleibt aber im Rohzustand, weist also eine hohe Rauhigkeit auf und ist nicht rechtwinklig zur Drehachse ausgerichtet. Um Arbeitsfluide abgedichtet in entsprechende Bohrungen 11a, 11b, 11c in dem Werkzeug 3 zu übergeben, die am Schaftende des Werkzeugs 3 münden, muss das Schaftende üblicherweise nachbearbeitet werden, um eine definierte und zur Drehachse rechtwinklige Dichtfläche zu erhalten, wodurch ein hoher Kostenaufwand entsteht. Außerdem besteht bei Verwendung von nicht nachbearbeiteten Schaftenden bei den üblichen Werkzeugaufnahmen die Gefahr von Leckagen. Aus diesem Grund weist das Anschlagteil 6 an einer dem Werkzeugschaft 4 zugewandten Stirnseite 12 ein bewegliches Anschlagstück 13 auf, durch welches sich die zwei Fluidzuführungen 9, 10 erstrecken.

Um zu gewährleisten, dass die Arbeitsfluide durch die Fluidzuführungen 9, 10 zuverlässig zum Werkzeug 3 transportiert werden, ist die Strömungsführung von entscheidender Bedeutung. Hierzu sind die mindestens zwei Fluidzuführungen 9, 10 in dem Anschlagteil 6 und damit auch in den Anschlagstück 13 als geschlossene Kanäle mit bevorzugt weitestgehend gleichbleibendem Querschnitt ausgebildet. Hierdurch wird verhindert, dass sich die Strömung der Arbeitsfluide bei einer Erweiterung des Kanalquerschnitts verlangsamt und es zu einer Trennung von Arbeitsfluiden kommt, welche oft als Öl-Luft-Gemisch ausgebildet sind. Die Fluidzuführungen 9, 10 münden in Austrittsöffnungen 14a, 14b, 14c an einer dem Werkzeugschaft 4 zugewandten Stirnseite 12, welche den Bohrungen 11a, 11b, 11c im Werkzeug 3 gegenüberliegen, so dass eine leckagefreie Übergabe der Arbeitsfluide an das Werkzeug 3 möglich ist.

Wie der Figur 1 zu entnehmen ist, ist eine erste Fluidzuführung 9 zentral in dem Aufnahmekörper 2, insbesondere koaxial zu dem Aufnahmekörper 2, und eine zweite Fluidzuführung 10 seitlich versetzt dazu angeordnet. Die zweite Fluidzuführung ist dabei abschnittsweise als Ringspalt koaxial zu dem Aufnahmekörper 2 ausgebildet. Weitere Details sind aus den nachfolgenden Darstellungen zu entnehmen.

In Figur 2 ist ein Längsschnitt durch das Anschlagteil 6 gemäß der ersten Ausführungsform von Figur 1 gezeigt. Wie dort zu entnehmen ist, ist das Anschlagstück 13 separat von dem Anschlagteil 6 ausgebildet und mittels eines Kugelgelenks 16 beweglich in dem Anschlagteil 6 gelagert. Hierdurch wird gewährleistet, dass das Anschlagstück 13 geringfügig gegenüber dem Anschlagteil 6 verkippen kann und hierdurch eine Anpassung an schräge Schaftenden möglich ist.

Das Kugelgelenk 16 wird durch eine Kugelkalotte 17 an dem Anschlagstück 13 gebildet, welche in einer Kugelpfanne 18 am Anschlagteil 6 gelagert ist. Es ist jedoch auch möglich, die Kugelkalotte 17 am Anschlagteil 6 und die Kugelpfanne 18 am Anschlagstück 13 vorzusehen. Bevorzugt reicht die Kugelpfanne 18 über den größten Durchmesser der Kugelkalotte 17 hinaus und umgreift diese geringfügig. Dadurch kann die Kugelkalotte 17 sicher in der Pfanne gehalten werden. Zur Montage oder Demontage wird bevorzugt die Elastizität des Materials ausgenutzt. Deshalb darf die Umschlingung der Kugelkalotte 17 durch die Kugelpfanne 18 nicht zu groß sein. Alternativ kann die Kugelkalotte 17 in der Kugelpfanne 18 auch durch zusätzliche nicht dargestellte Befestigungselemente, wie z. B. Schrauben, Sprengringe, Klammern und dgl. befestigt sein. In diesem Fall ist ein Umgreifen der Kugel nicht erforderlich. Ein besonderer Vorteil der zweistückigen Bauweise aus Anschlagteil und Anschlagstück besteht darin, dass bei Verwendung von Werkzeugen mit unterschiedlichen Kanalanordnungen nur das Anschlagstück zur Anpassung getauscht werden muss.

Der Schwenkwinkel der Kugelkalotte 17 aus der Mittelstellung heraus beträgt weniger als 10°, bevorzugt weniger als 5°, besonders bevorzugt weniger als 2°. Die Kanalenden an der Übergabestelle von Kugelpfanne 18 und Kugelkalotte 17 sind so gestaltet, dass auch bei maximalem Auslenkwinkel noch keine wesentliche Verringerung des Kanalquerschnittes erfolgt. Bei großen möglichen Auslenkwinkeln kann zumindest eines der der Kanalenden eine Erweiterung aufweisen, so dass der verbleibende Querschnitt auch bei maximaler Auslenkung noch ausreichend groß ist.

Wie der Figur 2 weiter zu entnehmen ist, ist in dem Anschlagteil 6 und dem Anschlagstück 13 eine zentrale Fluidzuführung 9 und seitlich dazu versetzt mehrere weitere Fluidzuführungen 10a, 10b angeordnet. Die seitlich versetzten Fluidzuführungen 10a, 10b münden in einem Ringraum 19, in welchem das entsprechende Arbeitsfluid auf die Fluidzuführungen 10a, 10b aufgeteilt wird.

Um eine besonders gute Abdichtung gegenüber dem Schaftende eines Werkzeugs zu erreichen, ist das Anschlagstück 13 aus einem elastischen Material hergestellt, so dass sich dieses an das Schaftende anpassen und großflächig anliegen kann.

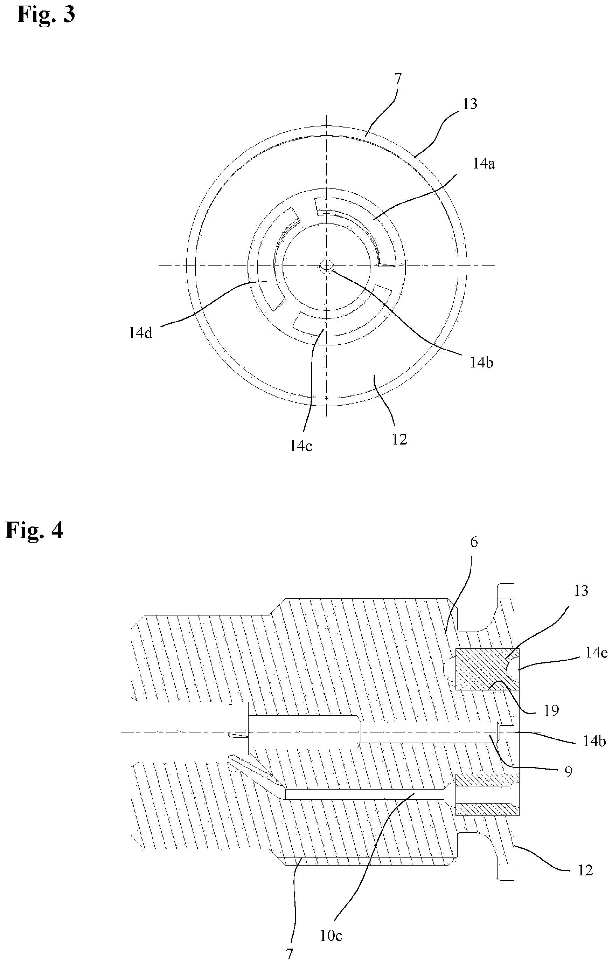

In Figur 3 ist eine Draufsicht auf das Anschlagteil von Figur 2 gezeigt. Wie dort zu entnehmen ist, münden die Austrittsöffnungen 14a, 14c, 14d der seitlich versetzten Fluidzuführungen 10a, 10b in einer ringförmigen Nut in der Stirnseite 12.

Unabhängig von der Winkellage zwischen dem einzuspannenden Werkzeug und dem Anschlagstück 13 wird hierdurch eine sichere Übergabe der Arbeitsfluide ermöglicht.

In Figur 4 ist ein Längsschnitt durch ein Anschlagteil 6 gemäß einer zweiten Ausführungsform gezeigt. Bei dieser und den weiteren alternativen Ausführungsformen sind gleiche Bauteile mit den gleichen Bezugszeichen versehen. Sofern Unterschiede zu den übrigen Ausführungsformen vorliegen, werden diese beschrieben, im Übrigen weisen die Ausführungsformen die gleichen Merkmale auf.

Wie aus Figur 4 hervorgeht, kann das Anschlagstück 13 auch als Dichtring ausgebildet sein, welcher in einer entsprechenden Ringnut 19 in dem Anschlagteil 6 eingesetzt ist. Das Anschlagstück 13 in Form des Dichtrings besteht aus einem elastischen Material und steht gegenüber der Stirnseite 12 des Anschlagteils 6 hervor. Wie auch bei den weiteren Ausführungsformen wird dort ein Arbeitsfluid aus der zentralen Fluidzuführung 9 über eine zentrale Auslassöffnung 14b mittig an eine zentrale Kühlmittelbohrung des Werkzeuges übergeben und ein weiteres Arbeitsfluid außermittig aus versetzten Fluidzuführungen, von denen nur die Fluidzuführung 10c dargestellt ist, über eine entsprechende ringförmige Austrittsöffnung 14e an dezentral liegende Kühlmittelbohrungen im Werkzeug übergeben. Die außermittig liegenden Bohrungen des Werkzeugs werden gemeinsam über die als umlaufende Nut in der Stirnseite 12 des Anschlagstücks 13 versorgt. Die Elastizität insbesondere der Abdichtung der Nut erfolgt hier über die Elastizität des als Dichtring ausgebildeten Anschlagstücks 13. Beim Einspannen des Werkzeuges wird das Schaftende zunächst an das vorstehende Anschlagstück 13 angepresst. Dieses wird elastisch axial zusammengedrückt und damit abgedichtet. Es kann zudem eine zentrale nicht gesondert dargestellte Dichtfläche um die zentrale Austrittsöffnung 14b vorgesehen sein, welche beim Anpressen des Werkzeugschafts anschließend zur Anlage kommt und die Austrittsöffnung 14b zusätzlich zum Anschlagstück 13 abdichtet. Auch kann um die zentrale Austrittsöffnung 14b in ihrem Mündungsbereich ein weiteres elastisches Dichtstück vorgesehen sein.

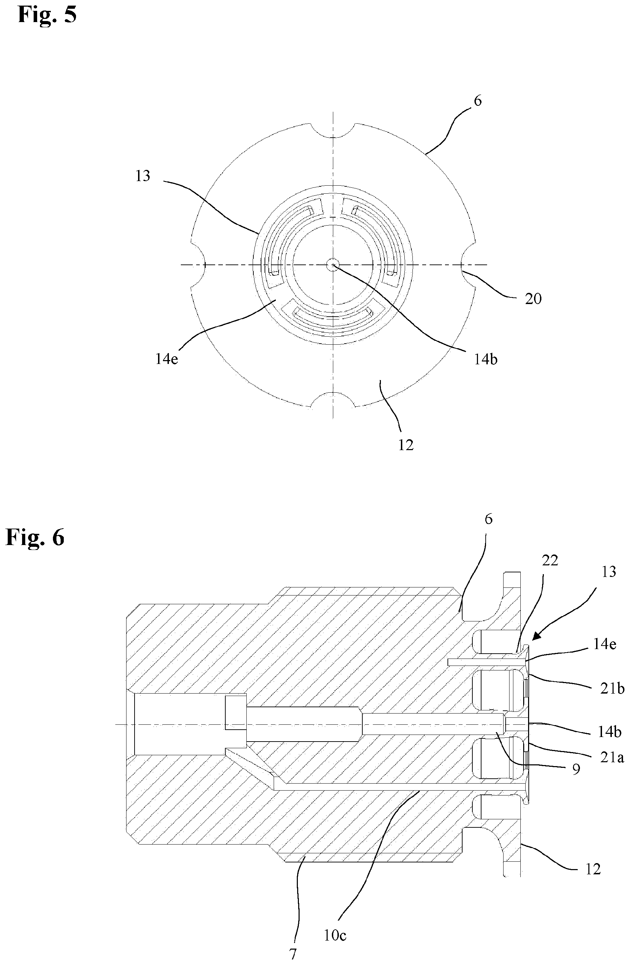

In Figur 5 ist eine Draufsicht auf das Anschlagteil von Figur 4 gezeigt. Wie dort zu entnehmen ist, ist die Austrittsöffnung 14e der seitlich versetzten Fluidzuführungen 10c als umlaufende Nut in dem Anschlagstück 13 ausgebildet. Unabhängig von der Drehwinkellage zwischen dem einzuspannenden Werkzeug und dem Anschlagstück 13 wird hierdurch eine sichere Übergabe der Arbeitsfluide ermöglicht. Zudem weist das Anschlagteil 6 im Bereich der Stirnseite 12 mehrere am Umfang gleichmäßige verteile Schlüsselflächen 20 auf, welche zum Zusammenwirken mit einem Handwerkzeug ausgebildet sind.

In Figur 6 ist ein Längsschnitt durch ein Anschlagteil 6 gemäß einer dritten Ausführungsform gezeigt. Im Unterschied zu den vorhergehenden Ausführungsformen ist das Anschlagstück 13 einteilig mit dem Anschlagteil 6 ausgebildet. Zudem ist die zentrale Austrittsöffnung 14b als ein dünnwandiger hülsenförmig vorstehender Körper mit einem die Austrittsöffnung 14b umgebenden elastischen Kragen 21a, also eine kragenförmige radiale Erweiterung am Ende, ausgebildet, die beide für die notwendige Elastizität sorgen. Diese zentrale Austrittsöffnung 14b wird von einer ringförmigen Austrittsöffnung 14e umgeben, welche zwischen an der Stirnseite vorstehenden umlaufenden, dünnwandigen Stegen 22 ausgebildet ist. An den Stegen 22 sind weitere ringförmige elastische Krägen 21b benachbart der Austrittsöffnung 14e ausgebildet. Die ringförmigen Krägen 21a, 21b können in Richtung des Werkzeugschafts vorstehend ausgebildet sein. Die Flexibilität der Dichtflächen wird zum einen durch radial überstehende Kragenflächen erzielt, die entsprechend dünnwandig ausgeführt sind, so dass sie in axialer Richtung elastisch sind. Zum anderen sind die umlaufenden Stege 22 selbst so dünnwandig, dass sie in radialer Richtung biegsam sind.

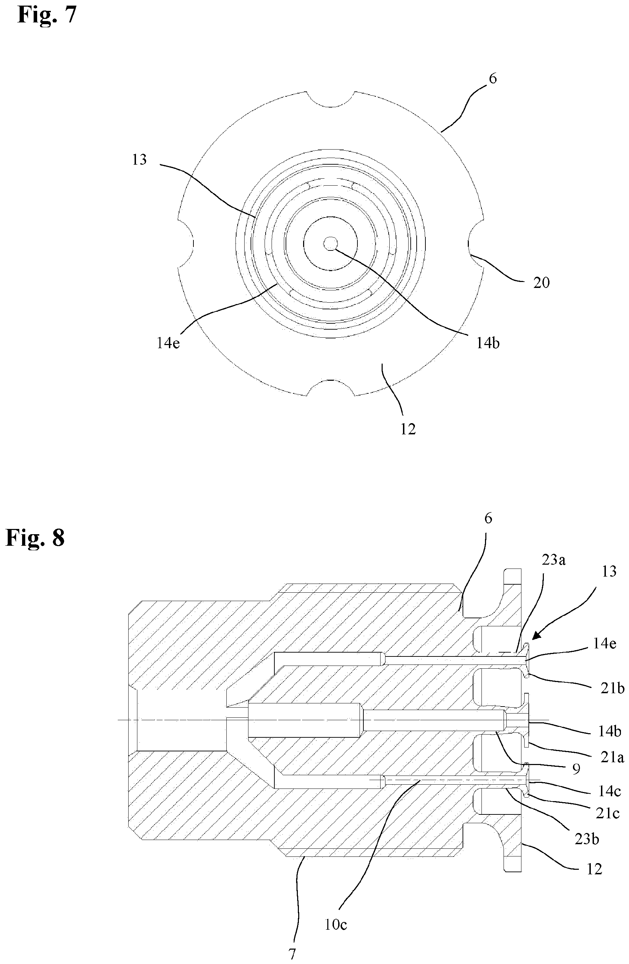

In Figur 7 ist eine Draufsicht auf das Anschlagteil 6 von Figur 6 gezeigt. Wie dort zu entnehmen ist, ist die Austrittsöffnung 14e der seitlich versetzten Fluidzuführungen 10c ebenfalls als umlaufende Nut in dem Anschlagstück 13 ausgebildet. Unabhängig von der Drehwinkellage zwischen dem einzuspannenden Werkzeug und dem Anschlagstück 13 wird hierdurch eine sichere Übergabe der Arbeitsfluide ermöglicht. Zudem weist das Anschlagteil 6 im Bereich der Stirnseite 12 mehrere am Umfang gleichmäßige verteilte Schlüsselflächen 20 auf, welche zum Zusammenwirken mit einem Handwerkzeug ausgebildet sind.

In Figur 8 ist ein Längsschnitt durch ein Anschlagteil 6 gemäß einer nicht erfindungsgemäßen vierten Ausführungsform gezeigt. Hierbei sind im Unterschied zur dritten Ausführungsform in den Figuren 6 und 7 alle Austrittsöffnungen 14c, 14e als zapfenförmige Fortsätze bzw. Zapfen 23a, 23b ausgebildet, also entsprechend der zentralen Austrittsöffnung 14b der dritten Ausführungsform. Bei dieser Variante müssen die äußeren Bohrungen im Werkzeug in Drehrichtung mit den äußeren Zapfen 23a, 23b des Anschlagstückes 13 in Deckung gebracht werden. Dies kann durch nicht dargestellte Indexierelemente zwischen Werkzeug 3 und Anschlagstück 13 geschehen. Die Elastizität der Dichtflächen wird sowohl durch die dünne und damit biegsame Gestaltung der Zapfen 23a, 23b als auch durch die dünnwandige tellerförmige Verbreiterung der Zapfen 23a, 23b erzielt.

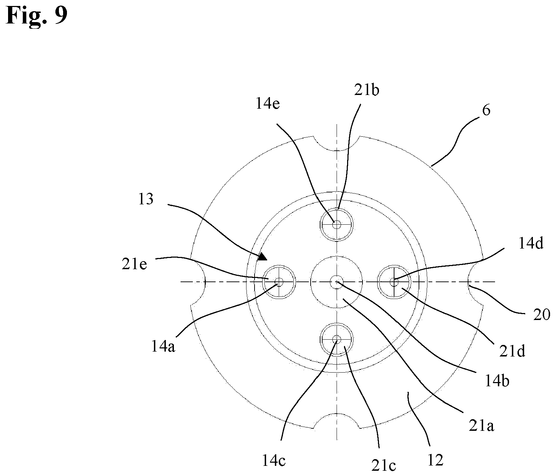

In Figur 9 ist eine Draufsicht auf das Anschlagteil von Figur 8 gezeigt. Wie dort zu entnehmen ist, weist jeder der Zapfen die Austrittsöffnungen 14a, 14b, 14c, 14d, 14e einen eigenen umlaufenden Kragen 21a, 21b, 21c, 21d, 21e auf.

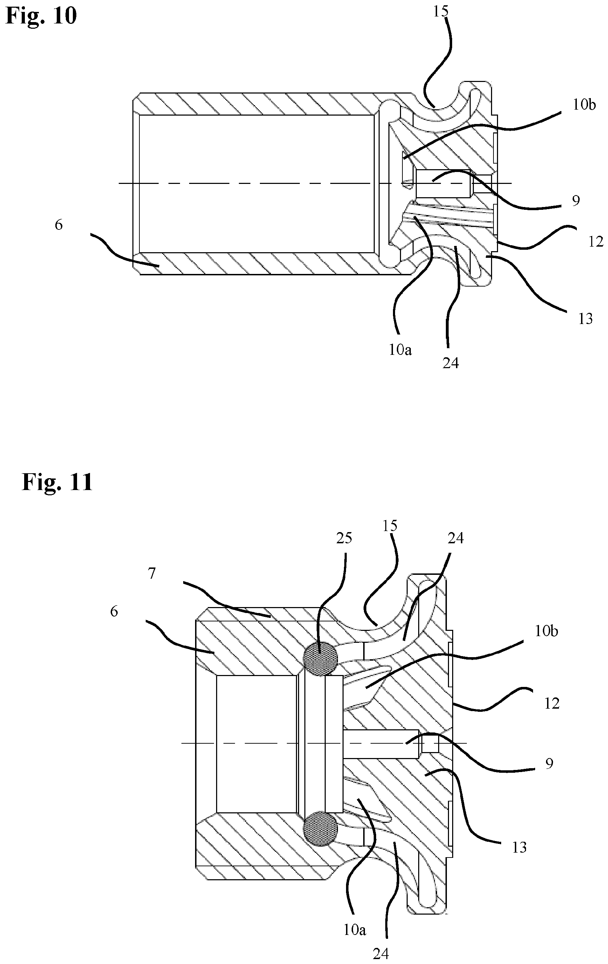

In Figur 10 ist ein Längsschnitt durch ein Anschlagteil 6 gemäß einer fünften Ausführungsform gezeigt. Das Anschlagstück 13 ist hier durch einen Kanal 24 federnd an dem Anschlagteil 6 ausgebildet. Dadurch kann sich das Anschlagstück in besonders vorteilhafter Weise mit der notwendigen Elastizität an die Stirnseite 12 des Werkzeugschafts 4 anpassen und gleichzeitig einteilig mit dem Anschlagteil 6 ausgebildet sein.

Die Figur 11 ist eine alternative Ausführungsform der Figur 10 für größere Durchmesser, in die bereits ein O-Ring 25 eingesetzt wurde.

In einer bevorzugten Ausführungsform ist der Kanal so geschwungen, dass er der konkaven Einbuchtung 15 unterhalb der Stirnseite 12 folgt. Je nach der Dimensionierung des Anschlagstücks 13 ergibt sich dabei ein C- oder S-förmiger Querschnitt. Der Kanal 24 ist bevorzugt umlaufend ausgebildet, kann aber auch in zwei bis fünf Segmente unterteilt werden. Dies kann zum Beispiel bei großen Durchmessern nötig sein um die Stabilität der Stirnseite 12 zu gewährleisten.

In der besonders bevorzugten Ausführungsform wird der Kanal gegen Verschmutzung zur Einlassseite für das Kühlmittel hin mit einem O-Ring 25 abgedichtet, der auch als zusätzliches, elastisches Abstützelement für die Stirnseite 12 fungieren kann. Da diese Ausführungsform der Erfindung vorzugsweise durch ein additives Verfahren gefertigt wird, ist es auch möglich völlig auf den O-Ring 25 zu verzichten und stattdessen den Kanal 24 nach außen hin geschlossen zu fertigen. Es sei angemerkt, dass man ggf. eine kleinere Öffnung zu dem geschlossenen Kanal 24 einbringt und später wieder verschließt um nicht geschmolzenes Sinterpulver entlassen zu können.

Wie den Figuren 10 und 11 weiter zu entnehmen ist, sind in dem Anschlagteil 6 und dem Anschlagstück 13 eine zentrale Fluidzuführung 9 und seitlich dazu versetzt mehrere weitere Fluidzuführungen 10a, 10b angeordnet. Die seitlich versetzten Fluidzuführungen 10a, 10b zweigen von einer Ringnut im Anschlagteil ab, in welcher sich das entsprechende Arbeitsfluid auf die Fluidzuführungen 10a, 10b aufgeteilt.

Bei den gezeigten Ausführungsformen kann auch eine Kombination aus elastischem Kragen und Dichtringen zum Einsatz kommen. Die Abdichtung zwischen Anschlagstück und Schaftende erfolgt bevorzugt über die Flächenpressung der elastischen Bauteile aufeinander, insbesondere bei Verwendung von kryogenen Kühlmitteln. Zusätzlich können auch spezielle Dichtmaterialien wie Gummi oder dergleichen auf die Dichtflächen aufgebracht werden.

Die Herstellung der Anschlagstücke kann mittels Zerspanen aus Vollmaterial, Additive Fertigung, z. B. Lasersintern, Gießverfahren etc. erfolgen. Insbesondere bei Additiver Fertigung können die Kanäle beliebig im Anschlagstück geführt werden. Es ist auch möglich, die Kanäle über Kreuz, also den inneren Kanal aus der Zuführung an die äußeren Bohrungen des Werkzeuges und umgekehrt zu führen. Die Arbeitsfluide können auch beliebig an einzelne Bohrungen des Werkzeuges geleitet werden.

### Bezugszeichenliste

- 1: Werkzeugaufnahme
- 2: Aufnahmekörper
- 3: Werkzeug
- 4: Werkzeugschaft
- 5: Aufnahmeöffnung
- 6: Anschlagteil
- 7: Außengewinde
- 8: Innengewinde
- 9: Erste Fluidzuführung
- 10, 10a, 10b, 10c: Zweite Fluidzuführung
- 11a, 11b, 11c: Bohrungen im Werkzeug
- 12: Stirnseite
- 13: Anschlagstück
- 14a, 14b, 14c, 14d, 14e: Austrittsöffnung
- 15: Einbuchtung
- 16: Kugelgelenk
- 17: Kugelkalotte
- 18: Kugelpfanne
- 19: Ringnut
- 20: Schlüsselfläche
- 21a, 21b, 21c, 21d, 21e: Kragen
- 22: Umlaufender Steg
- 23a, 23b: Zapfen
- 24: Ringkanal
- 25: O-Ring

## Patentansprüche

1. Werkzeugaufnahme (1) umfassend einen Aufnahmekörper (2) mit einer Aufnahmeöffnung (5) für einen Werkzeugschaft (4) eines Werkzeugs (3) und ein in der Aufnahmeöffnung (5) angeordnetes Anschlagteil (6) zur Anlage an der Stirnseite des Werkzeugschafts (4), wobei die Werkzeugaufnahme (1) mehrere durch den Aufnahmeköper (2) und das Anschlagteil (6) verlaufende Fluidzuführungen (9; 10; 10a; 10b, 10c) für die Zuführung eines Arbeitsfluids zu dem Werkzeug (3) aufweist, wobei das Anschlagteil (6) an einer dem Werkzeugschaft (4) zugewandten Stirnseite (12) ein bewegliches Anschlagstück (13) aufweist, durch welches sich die Fluidzuführungen (9; 10; 10a; 10b, 10c) erstrecken, wobei die Werkzeugaufnahme (1) zwei durch den Aufnahmeköper (2), das Anschlagteil (6) und das Anschlagstück (13) getrennt verlaufende Fluidzuführungen (9; 10; 10a; 10b, 10c) für die Zuführung zweier Arbeitsfluide zu dem Werkzeug (3) aufweist, wobei die Fluidzuführungen (9; 10; 10a; 10b, 10c) in entsprechenden Austrittsöffnungen (14a; 14b; 14c; 14d; 14e) an der dem Werkzeugschaft (4) zugewandten Stirnseite (12) des Anschlagstücks (13) münden, wobei in dem Anschlagteil (6) und dem Anschlagstück (13) eine zentrale Fluidzuführung (9) und seitlich dazu versetzt mehrere weitere Fluidzuführungen (10a, 10b, 10c) angeordnet sind, **dadurch gekennzeichnet, dass** die Austrittsöffnungen (14a, 14b, 14c, 14d, 14e) der seitlich versetzten Fluidzuführungen (10a, 10b, 10c) in einer ringförmigen Nut in der Stirnseite (12) des Anschlagstücks (13) münden.

2. Werkzeugaufnahme (1) nach Anspruch 1, **dadurch gekennzeichnet, dass** die Fluidzuführungen (9; 10; 10a; 10b, 10c) in dem Anschlagteil (6) als geschlossener Kanal ausgebildet ist.

3. Werkzeugaufnahme (1) nach einem der vorhergehenden Ansprüche, **dadurch gekennzeichnet, dass** das Anschlagstück (13) einteilig an dem Anschlagteil (6) oder als separates Bauteil ausgebildet ist.

4. Werkzeugaufnahme (1) nach einem der vorhergehenden Ansprüche, **dadurch gekennzeichnet, dass** das Anschlagstück (13) aus einem elastischen Material besteht.

5. Werkzeugaufnahme (1) nach einem der vorhergehenden Ansprüche, **dadurch gekennzeichnet, dass** das Anschlagstück (13) beweglich in dem Anschlagteil (6) gelagert ist.

6. Werkzeugaufnahme (1) nach Anspruch 4, **dadurch gekennzeichnet, dass** das Anschlagstück (13) über ein Kugelgelenk (16) in dem Anschlagteil (6) gelagert ist.

7. Werkzeugaufnahme (1) nach einem der vorhergehenden Ansprüche, **dadurch gekennzeichnet, dass** das Anschlagteil (6) ein Außengewinde (7) zur Verbindung mit einem Innengewinde (8) an dem Aufnahmekörper (2) und mindestens eine Schlüsselfläche (20) zur Verdrehung des Anschlagteils (6) aufweist.

## Claims

1. Tool receptacle (1) comprising a receptacle body (2) with a receptacle opening (5) for a tool shank (4) of a tool (3), and a stop part (6) which is arranged in the receptacle opening (5) and serves for abutment against the end face of the tool shank (4), wherein the tool receptacle (1) has multiple fluid feed lines (9; 10; 10a; 10b; 10c), running through the receptacle body (2) and the stop part (6), for feeding of a working fluid to the tool (3), wherein, on an end face (12) facing towards the tool shank (4), the stop part (6) has a movable stop piece (13) through which the fluid feed lines (9; 10; 10a; 10b; 10c) extend, wherein the tool receptacle (1) has two fluid feed lines (9; 10; 10a; 10b; 10c), running separately through the receptacle body (2), the stop part (6) and the stop piece (13), for feeding of two working fluids to the tool (3), wherein the fluid feed lines (9; 10; 10a; 10b; 10c) open out into corresponding outlet openings (14a; 14b; 14c; 14d; 14e) at the end face (12) of the stop piece (13) facing towards the tool shank (4), wherein a central fluid feed line (9) and, offset laterally therefrom, multiple further fluid feed lines (10a, 10b, 10c) are arranged in the stop part (6) and the stop piece (13), **characterized in that** the outlet openings (14a, 14b, 14c, 14d, 14e) of the laterally offset fluid feed lines (10a, 10b, 10c) open out into an annular groove in the end face (12) of the stop piece (13).

2. Tool receptacle (1) according to Claim 1, **characterized in that** the fluid feed lines (9; 10; 10a; 10b; 10c) are formed in the stop part (6) as a closed channel.

3. Tool receptacle (1) according to either of the preceding claims, **characterized in that** the stop piece (13) is formed integrally on the stop part (6) or as a separate component.

4. Tool receptacle (1) according to one of the preceding claims, **characterized in that** the stop piece (13) consists of an elastic material.

5. Tool receptacle (1) according to one of the preceding claims, **characterized in that** the stop piece (13) is movably mounted in the stop part (6).

6. Tool receptacle (1) according to Claim 4, **characterized in that** the stop piece (13) is mounted in the stop part (6) via a ball joint (16).

7. Tool receptacle (1) according to one of the preceding claims, **characterized in that** the stop part (6) has an external thread (7) for connection to an internal thread (8) on the receptacle body (2) and has at least one spanner flat (20) for rotation of the stop part (6).

## Revendications

1. Logement d'outil (1) comprenant un corps de logement (2) avec une ouverture de logement (5) pour une tige d'outil (4) d'un outil (3) et une partie de butée (6) agencée dans l'ouverture de logement (5) pour l'appui sur le côté frontal de la tige d'outil (4), le logement d'outil (1) présentant plusieurs amenées de fluide (9 ; 10 ; 10a ; 10b ; 10c) s'étendant à travers le corps de logement (2) et la partie de butée (6) pour l'amenée d'un fluide de travail à l'outil (3), la partie de butée (6) présentant, sur un côté frontal (12) tourné vers la tige d'outil (4), une pièce de butée mobile (13), à travers laquelle les amenées de fluide (9 ; 10 ; 10a ; 10b ; 10c) s'étendent, le logement d'outil (1) présentant deux amenées de fluide (9 ; 10 ; 10a ; 10b ; 10c) s'étendant séparément à travers le corps de logement (2), la partie de butée (6) et la pièce de butée (13) pour l'amenée de deux fluides de travail à l'outil (3), les amenées de fluide (9 ; 10 ; 10a ; 10b ; 10c) débouchant dans des ouvertures de sortie respectives (14a ; 14b ; 14c ; 14d ; 14e) sur le côté frontal (12) de la pièce de butée (13) tourné vers la tige d'outil (4), une amenée de fluide centrale (9) et plusieurs autres amenées de fluide (10a, 10b, 10c) décalées latéralement par rapport à celle-ci étant agencées dans la partie de butée (6) et la pièce de butée (13), **caractérisé en ce que** les ouvertures de sortie (14a, 14b, 14c, 14d, 14e) des amenées de fluide (10a, 10b, 10c) décalées latéralement débouchent dans une rainure annulaire dans le côté frontal (12) de la pièce de butée (13).

2. Logement d'outil (1) selon la revendication 1, **caractérisé en ce que** les amenées de fluide (9 ; 10 ; 10a ; 10b ; 10c) dans la pièce de butée (6) sont réalisées sous forme de canal fermé.

3. Logement d'outil (1) selon l'une quelconque des revendications précédentes, **caractérisé en ce que** la pièce de butée (13) est réalisée d'une seule pièce sur la partie de butée (6) ou sous forme de composant séparé.

4. Logement d'outil (1) selon l'une quelconque des revendications précédentes, **caractérisé en ce que** la pièce de butée (13) est constituée d'un matériau élastique.

5. Logement d'outil (1) selon l'une quelconque des revendications précédentes, **caractérisé en ce que** la pièce de butée (13) est montée de manière mobile dans la partie de butée (6).

6. Logement d'outil (1) selon la revendication 4, **caractérisé en ce que** la pièce de butée (13) est montée dans la partie de butée (6) par l'intermédiaire d'une articulation sphérique (16).

7. Logement d'outil (1) selon l'une quelconque des revendications précédentes, **caractérisé en ce que** la partie de butée (6) présente un filetage extérieur (7) pour la liaison avec un filetage intérieur (8) sur le corps de logement (2) et au moins un méplat (20) pour la rotation de la partie de butée (6).
